# EUROPEAN PATENT SPECIFICATION

(11) **EP 3 289 195 B1**
(45) Date of publication and mention of the grant of the patent: **12.01.2022**
(21) Application number: 16786932.0
(22) Date of filing: 19.04.2016
(51) Int. Cl.: F01N 3/20, F01N 3/28

(54) **FULL ROTATION MIXER**
VOLLROTATIONSMISCHER
MÉLANGEUR À ROTATION COMPLÈTE

(30) Priority: 30.04.2015 US 201562155007 P; 12.06.2015 US 201514737533
(43) Date of publication of application: 07.03.2018
(73) Proprietor: Faurecia Emissions Control Technologies, USA, LLC, Columbus, Indiana 47201 (US)
(72) Inventor: ALANO, Eduardo, Columbus, Indiana 47201 (US)
(74) Representative: Prinz & Partner mbB
(86) International application number: PCT/US2016/028229
(87) International publication number: WO 2016/176076

(56) References cited:
- WO-A1-2014/051617
- DE-A1-102009 046 280
- DE-A1-102014 105 836
- KR-A- 20110 049 152
- US-A1- 2009 019 843
- US-A1- 2009 107 126
- US-A1- 2012 216 513
- US-A1- 2014 318 112

## Description

### CROSS-REFERENCE TO RELATED APPLICATION

This application claims priority to United States Patent Application No. 15/132,464, filed April 19, 2016, which is a continuation-in-part application claiming priority to United States Patent Application No. 14/737,533, filed June 12, 2015, which claims priority to United States Provisional Patent Application No. 62/155,007, filed April 30, 2015.

### BACKGROUND OF THE INVENTION

An exhaust system conducts hot exhaust gases generated by an engine through various exhaust components to reduce emissions and control noise. The exhaust system includes an injection system that injects a diesel exhaust fluid (DEF) or a reducing agent, such as a solution of urea and water for example, upstream of a selective catalytic reduction (SCR) catalyst. A mixer is positioned upstream of the SCR catalyst and mixes engine exhaust gases and products of urea transformation.

The mixer includes an upstream baffle with an inlet opening and a downstream baffle with an outlet opening, with the upstream and downstream baffles being surrounded by an outer peripheral wall. A doser is mounted at an opening formed within the outer peripheral wall to spray the DEF into the exhaust stream. The spray tends to have a larger droplet size in order to provide a high spray penetration such that the droplets are spread across the entire mixer cross-section. However, smaller droplet sizes are preferred as droplets with smaller diameters evaporate more quickly than larger diameter droplets.

Due to packaging constraints it is important to provide a compact configuration for the mixer by minimizing the length of the mixer. Typically, mixers having a short length also have a large exhaust flow cross-sectional area. This is disadvantageous when using smaller droplet sizes as the droplets tend not to penetrate sufficiently into the exhaust flow. Thus, having the desired shorter mixing length and the desired smaller spray droplet size are at odds with each other. Not only must the droplets have a high spray penetration, the droplets must be distributed evenly.

In one known compact mixer configuration set forth in US 8661792, the inlet and outlet openings are orientated relative to each other such that the flow path provides 300 degrees of rotation from the inlet opening to the outlet opening. While this degree of rotation facilitates penetration and distribution, it is desirable to further improve mixing performance without increasing the mixer length.

DE 10 2014 105 836 A1 refers to an internal combustion engine including an exhaust treatment system with a fluid injection system and a vortex mixer for mixing injected fluid with exhaust gas expelled from the engine. The mixer comprises a container with an interior. A transverse wall separates the interior into an exhaust manifold and a diffuser chamber. A flow passage opens through the transverse wall to a tangential flow guide on the downstream side of the transverse wall to collect the exhaust gas. A passage of the injector receives a fluid injector for discharging a fluid into the exhaust gas to be mixed with the exhaust gas in the vortex mixer.

US 2009/0019843 A1 refers to an exhaust system for an internal combustion engine for a vehicle. The system comprises an exhaust passage for transporting exhaust gases, an injector coupled to a wall of the exhaust passage and a first mixing device arranged within the exhaust passage downstream of the injector within the mixing region. The mixing device includes a plurality of flaps, wherein said plurality of flaps are inclined relative to the longitudinal axis. A second mixing device is arranged within the exhaust passage downstream of the first mixing device.

DE 10 2009 046 280 A1 discloses a method which involves injecting a liquid reducing agent into an exhaust gas flow by an injection nozzle, wherein the liquid reducing agent is injected into an injection point positioned upstream of a reduction catalyst for reducing nitrogen oxide components in the exhaust gas. The exhaust gas is discharged from the injection nozzle through a bypass flow passage.

WO 2014/051617 A1 discloses a vehicle exhaust system that includes a mixer in accordance with the preamble of claim 1 and a doser that sprays a reducing agent into the mixer to be thoroughly mixed with the engine exhaust gases prior to introduction of the mixture into a downstream exhaust component.

### SUMMARY OF THE INVENTION

A mixer for a vehicle exhaust system is provided which includes a mixer body defining a mixer central axis and having an inlet configured to receive engine exhaust gas and an outlet. The mixer further includes an upstream baffle positioned within the mixer body and including one primary inlet opening being a large inlet opening that can receive the majority of the exhaust gas or a plurality of primary inlet openings that can receive the majority of the exhaust gas, and a plurality of perforations, slots or additional inlet openings. The mixer further includes a downstream baffle positioned within the mixer body to be spaced from the upstream baffle in a direction along the mixer central axis. A doser defines a doser axis and is positioned to spray a reducing agent into an area between the upstream baffle and the downstream baffle such that a mixture of reducing agent and exhaust gas exits the outlet. Furthermore, the mixer is configured such that the mixture moves through a rotational flow path that is at least 360 degrees before exiting the outlet. The upstream baffle includes a helical portion with a rim formed about an outer perimeter of the helical portion of the upstream baffle that has an upstream end portion and a downstream end portion and a wall that extends from the upstream end portion to the downstream end portion, wherein the at least one primary inlet opening is formed within the wall to initiate a swirling motion of the engine exhaust gas as the engine exhaust gas enters the inlet of the mixer body in order to increase mixing performance without increasing an axial length of the mixer body. The downstream baffle includes at least one primary outlet opening, the primary outlet opening being a large opening through which the majority of the exhaust gas exits, a plurality of additional outlet openings surrounded by lips, a helical portion that is formed by an upstream end portion and a downstream end portion that each include a flat surface portion with the helical portion extending there between and a wall that extends between the downstream end portion and the upstream end portion, and wherein the at least one primary outlet opening is formed in the wall. The mixer further includes an intermediate plate positioned between the upstream and downstream baffles to block direct flow from directly flowing from the primary inlet opening to the primary outlet opening, and wherein the intermediate plate initiates the rotational flow path that directs exhaust gases exiting the primary inlet opening through a rotation of more than 360 degrees about the mixer central axis before exiting the primary outlet opening

In a further embodiment of the above, the upstream baffle includes a first portion, a second portion offset from the first portion in a direction along the mixer central axis, and a third portion that transitions from the first portion to the second portion, and wherein the upstream baffle includes the least one primary inlet opening; and the downstream baffle includes a first portion, a second portion offset from the first portion in a direction along the mixer central axis, and a third portion that transitions from the first portion to the second portion, and wherein the downstream stream baffle includes the least one primary outlet opening.

In a further embodiment of any of the above, an extension plate is positioned within the mixer body downstream of the downstream baffle, the extension plate including at least one main plate outlet opening such that from an upstream location between the upstream baffle and downstream baffle at the doser axis to a downstream location at a center axis of the main plate outlet opening, the mixture goes through at least 390 degrees rotation.

In a further embodiment of any of the above, at least one of the upstream baffle and the downstream baffle includes at least one secondary opening that includes a lip, and wherein the lip extends away from a respective one of the upstream baffle and the downstream baffle to define a lip height that is at least three times a material thickness of the respective one of the upstream baffle and the downstream baffle.

In a further embodiment of any of the above, the first portion of the upstream baffle comprises a first flat surface, the second portion comprises a second flat surface that is smaller than the first flat surface, and the third portion comprises a helical surface that transitions from the first flat surface to the second flat surface, and wherein the upstream baffle includes a vertical wall portion extending between the first and second flat surface which includes the at least one primary inlet opening.

In a further embodiment of any of the above, the at least one primary inlet opening comprises at least three inlet openings formed in the vertical wall portion.

In a further embodiment of any of the above, the first flat surface comprises at least half of the upstream baffle.

In a further embodiment of any of the above, the upstream baffle includes a plurality of secondary inlet openings that are only formed within the first flat surface with a remaining portion of the upstream baffle being free from secondary inlet openings.

In a further embodiment of any of the above, the first portion of the downstream baffle comprises a first flat surface, the second portion comprises a second flat surface offset from the first flat surface, and the third portion comprises a helical surface that transitions from the first flat surface to the second flat surface, and wherein the primary outlet opening comprises an open area formed within a vertical offset between the first and second flat surfaces of the downstream baffle.

In a further embodiment of any of the above, the downstream baffle includes at least one secondary outlet opening, and wherein at least half of the downstream baffle has a solid surface free from secondary outlet openings, and wherein the solid surface of the downstream baffle is aligned with the doser axis such that a spray zone defined by the doser extends over the solid surface without encountering any secondary outlet openings.

These and other features of this application will be best understood from the following specification and drawings, the following of which is a brief description.

### BRIEF DESCRIPTION OF THE DRAWINGS

Figure 1 schematically illustrates one example of an exhaust system with a mixer according to the subject invention.
Figure 2A is a perspective view of an upstream end of a mixer according to the subject invention.
Figure 2B is a perspective view of the mixer of Figure 2A from a downstream end.
Figure 3 is a perspective view of an upstream baffle of the mixer.
Figure 4A is a top view of a downstream baffle of the mixer.
Figure 4B is a perspective view of an upstream end face of the downstream baffle of Figure 4A.
Figure 5 is a perspective view of a sub-assembly with an intermediate plate to be included within the mixer.
Figure 6 is an upstream end view of the mixer showing a position of the intermediate plate and sub-assembly relative to the downstream baffle.
Figure 7 is a perspective assembled view of the mixer showing the intermediate plate between the upstream and downstream baffles.
Figure 8 is a view similar to Figure 6 but only showing the intermediate plate.
Figure 9 is an end view showing a doser axis location in relation to the intermediate plate.
Figure 10 is a schematic end view of the mixer showing a rotational flow path of approximately 390 degrees.
Figure 11 is a schematic end view of the mixer showing a rotational flow path of approximately 450 degrees.
Figure 12 is a perspective view from an inlet end of another embodiment of a mixer incorporating the subject invention.
Figure 13 is a perspective view from an outlet end of the mixer of Figure 12.
Figure 14A is a section view of baffles from the mixer shown in Figure 2A.
Figure 14B is a section view of baffles from the mixer shown in Figure 12.
Figure 15 is a perspective view of a downstream baffle and sub-assembly from the mixer of Figure 12.
Figure 16 is a perspective view from the inlet end of the mixer of Figure 12 but with the upstream baffle being removed.
Figure 17A is a perspective view from the outlet end of the mixer of Figure 12 without an extension plate.
Figure 17B is a perspective view from the outlet end of the mixer of Figure 12 with a first embodiment of an extension plate.
Figure 17C is a perspective view from the outlet end of the mixer of Figure 12 with a second embodiment of an extension plate.
Figure 18A is an end view of the mixer of Figure 17A showing a rotational flow path for the mixer of Figure 17A.
Figure 18B is an end view of the mixer of Figure 17B showing a rotational flow path for the mixer of Figure 17B.
Figure 18C is an end view of the mixer of Figure 17C showing a rotational flow path for the mixer of Figure 17C.
Figure 19A is a section view taken along the line 19A-19A as indicated in Figure 17C.
Figure 19B is a magnified view of the area identified in Figure 19A.
Figure 20A is an exploded view of the mixer of Figure 12.
Figure 20B is an exploded view of a sub-assembly and components as shown in Figure 20A.
Figure 20C is an exploded view from an outlet side of an extension baffle, downstream baffle, and mounting ring from Figure 20A.
Figure 20D is an exploded view from an outlet side of an extension baffle, downstream baffle, and mounting ring from Figure 20C.

### DETAILED DESCRIPTION

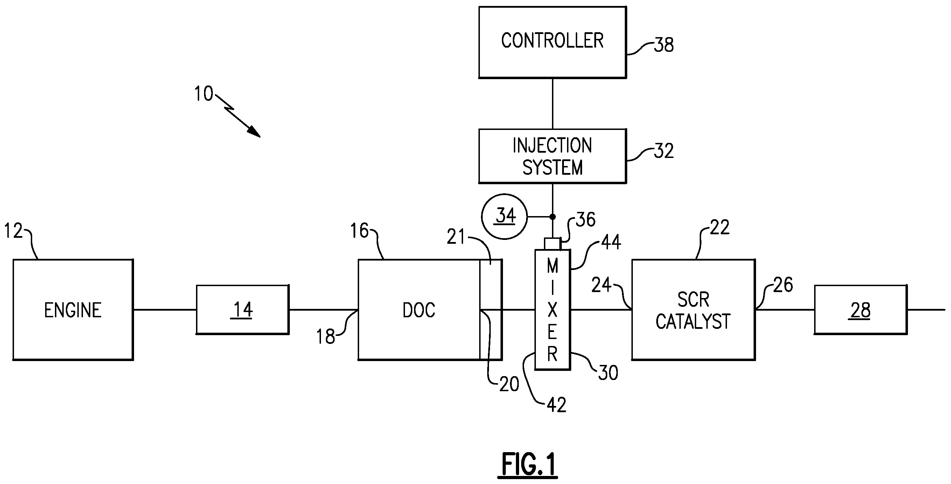

Figure 1 shows a vehicle exhaust system 10 that conducts hot exhaust gases generated by an engine 12 through various upstream exhaust components 14 to reduce emission and control noise as known. The various upstream exhaust components 14 can include one or more of the following: pipes, filters, valves, catalysts, mufflers etc.

In one example configuration, the upstream exhaust components 14 direct exhaust gases into a diesel oxidation catalyst (DOC) 16 having an inlet 18 and an outlet 20. Downstream of the DOC 16 is an optional component 21 that may be a diesel particulate filter (DPF), which is used to remove contaminants from the exhaust gas as known. In one example, the component 21 may be the DPF and a subsequent portion of exhaust pipe with an optional elbow type connection. In another example, the component 21 may be a portion of exhaust pipe with an optional elbow type connection. Downstream of the DOC 16 and optional component 21 is a selective catalytic reduction (SCR) catalyst 22 having an inlet 24 and an outlet 26. The inlet 24 may be located away from the mixer outlet face 44. In this example an exhaust system pipe will drive the exhaust flow to the catalyst 22. The outlet 26 communicates exhaust gases to downstream exhaust components 28. Optionally, component 22 can comprise a catalyst that is configured to perform a selective catalytic reduction function and a particulate filter function. The various downstream exhaust components 28 can include one or more of the following: pipes, filters, valves, catalysts, mufflers etc. These upstream 14 and downstream 28 components can be mounted in various different configurations and combinations dependent upon vehicle application and available packaging space.

A mixer 30 is positioned downstream from the outlet 20 of the DOC 16 or component 21 and upstream of the inlet 24 of the SCR catalyst 22. The upstream catalyst and downstream catalyst can be in-line, in parallel or any other configuration. The mixer 30 (as shown in the in-line configuration) is used to generate a swirling or rotary motion of the exhaust gas. An injection system 32 is used to inject a gaseous or liquid reducing agent, such as a solution of urea and water for example, into the exhaust gas stream upstream from the SCR catalyst 22 such that the mixer 30 can mix the injected substance and exhaust gas thoroughly together. In an example, the injection system 32 includes a fluid supply 34, a doser 36, and a controller 38 that controls injection of the reducing agent as known. Optionally, component 36 can be a pipe of introduction of gaseous reducing agent. Operation of the controller 38 to control injection of the reducing agent is known and will not be discussed in further detail.

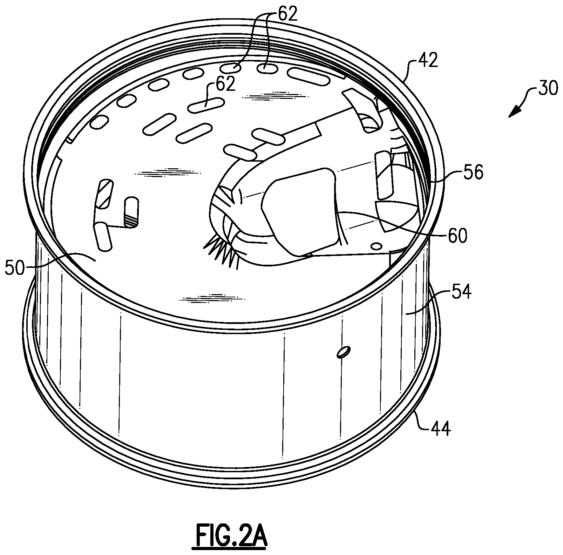

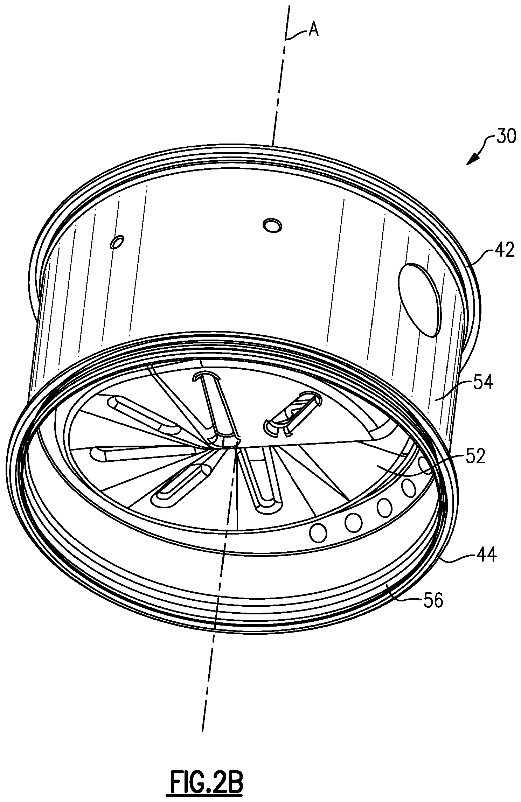

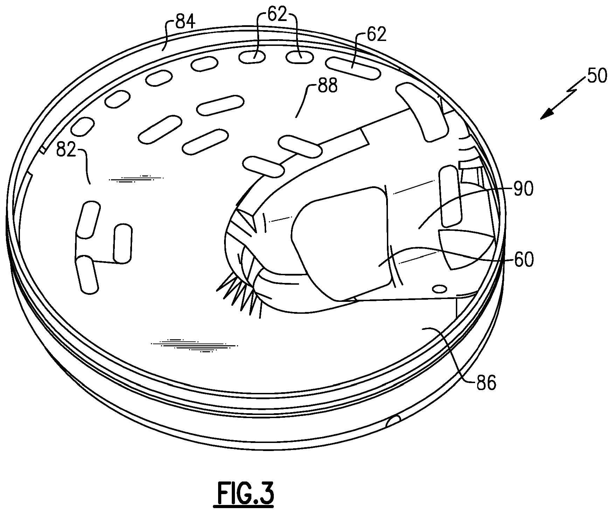

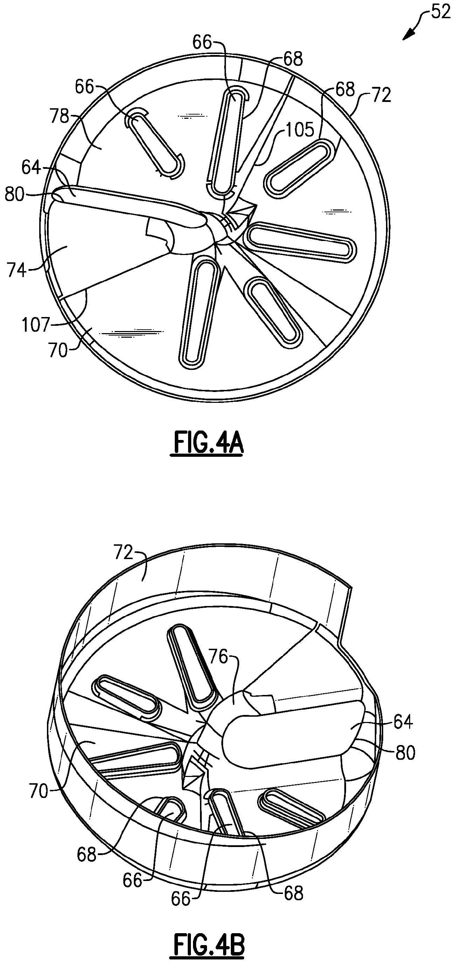

The mixer 30 is shown in greater detail in Figures 2-9. As shown in Figure 2A-2B, the mixer 30 comprises a mixer body having an inlet end 42 configured to receive the engine exhaust gases and an outlet end 44 to direct a mixture of swirling engine exhaust gas and products transformed from urea to the SCR catalyst 22. Further, the mixer body includes an upstream baffle 50 (Figure 2A and Figure 3) and a downstream baffle 52 (Figure 2B and Figures 4A-4B) that are surrounded by an outer peripheral wall 54. The upstream baffle 50 is configured to initiate swirling of the exhaust gas flow. The mixer 30 also includes an inner peripheral surface 56 that faces inwardly toward a mixer center axis A (Figure 2B).

The upstream baffle 50 at the inlet 42 may include a large inlet opening 60 that can receive the majority of the exhaust gas (for example, the large inlet opening 60 receives 60% of the exhaust mass flow rate), and which is configured to initiate the swirling motion. The upstream baffle 50 also includes a plurality of perforations, slots, or additional inlet openings 62 that ensure optimal homogenization of exhaust gases and reduces back pressure. The upstream baffle 50 and the plurality of inlet openings 60, 62 cooperate to initiate a swirling motion to the exhaust gas as the exhaust gas enters the inlet end 42 of the mixer 30.

The downstream baffle 52 includes a large outlet opening 64 (Figures 4A-4B) through which the majority of the exhaust gas exits. The downstream baffle 52 also includes a plurality of additional outlet openings 66 surrounded by lips 68 through which the exhaust gas exits. The lips 68 keep the urea inside the mixer 30 in order to increase DEF transformation and improve mixing performance. The lips 68 also generate additional turbulence to further improve mixing performance. The downstream baffle 52 comprises a helical portion 70. An axis of the helix is the center axis of the mixer represented by A (Figure 2B) with a rim 72 formed about an outer perimeter of the helical portion 70. The rim 72 extends in an upstream direction.

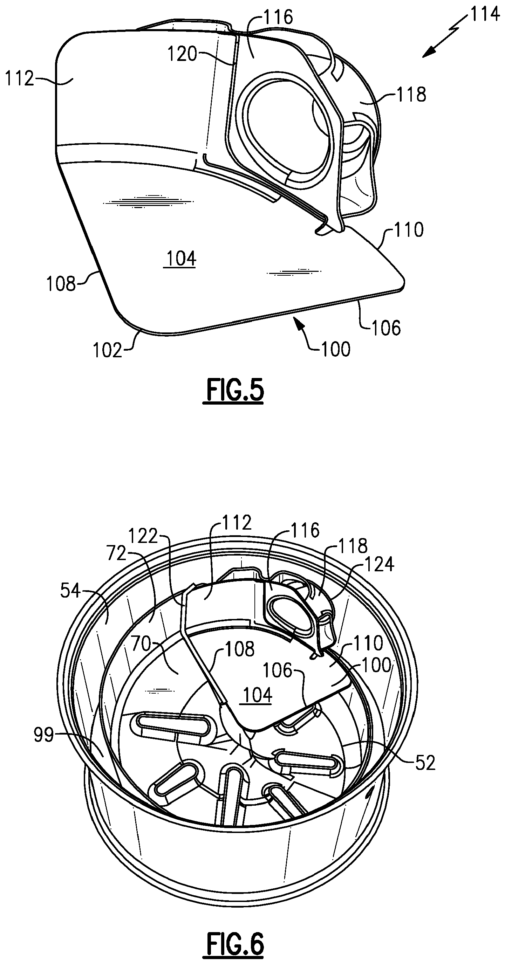

The large outlet opening 64 comprises a primary outlet opening and is larger than the other outlet openings 66. The helical portion 70 includes the additional outlet openings 66. The helical portion 70 is formed by an upstream end portion 74 and a downstream end portion 78. The upstream 74 and downstream 78 end portions each include a flat surface portion with the helical portion 70 extending therebetween. A transition line between the helical portion 70 and flat portion of the upstream end portion 74 is indicated at 107 in Figure 4A. A transition line between the helical portion 70 and flat portion of the downstream end portion 78 is indicated at 105 in Figure 4A. The flat surface portions of the end portions 74 and 78 are perpendicular to the mixer axis A (Figure 2B). A wall 80 extends between the flat surface of the downstream end portion 78 and the flat surface of the upstream end portion 74, and the primary outlet opening 64 is formed within the wall 80. A connector ring 99 (Figure 6) can be used to connect the baffle 52 to the wall 54 of the mixer body. Optionally, the baffle 52 could be directly attached to the wall 54.

Similarly, the upstream baffle 50 comprises a helical portion 82 with a rim 84 formed about an outer perimeter of the helical portion 82. The large inlet opening 60 comprises a primary inlet opening and may be larger than the other inlet openings 62. The helical portion 82 includes additional inlet openings 62 and has an upstream end portion 88 and a downstream end portion 86. A wall 90 extends from the upstream portion 88 to the downstream portion 86 and the primary inlet opening 60 is formed within the wall 90.

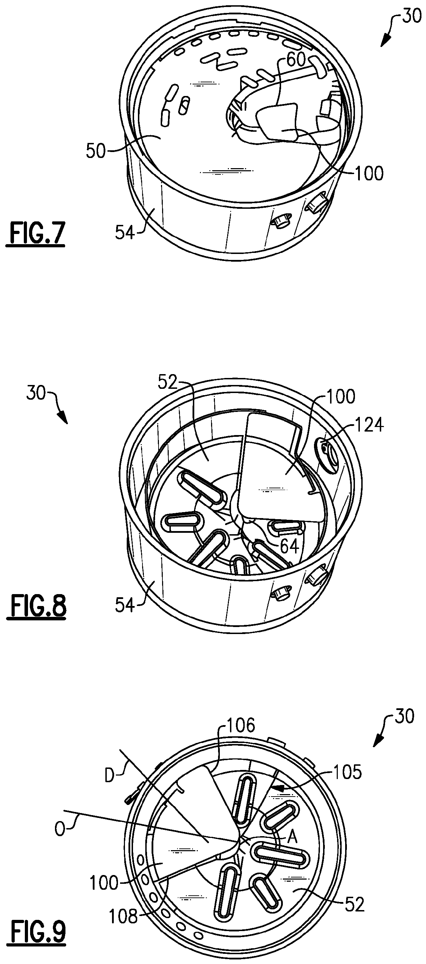

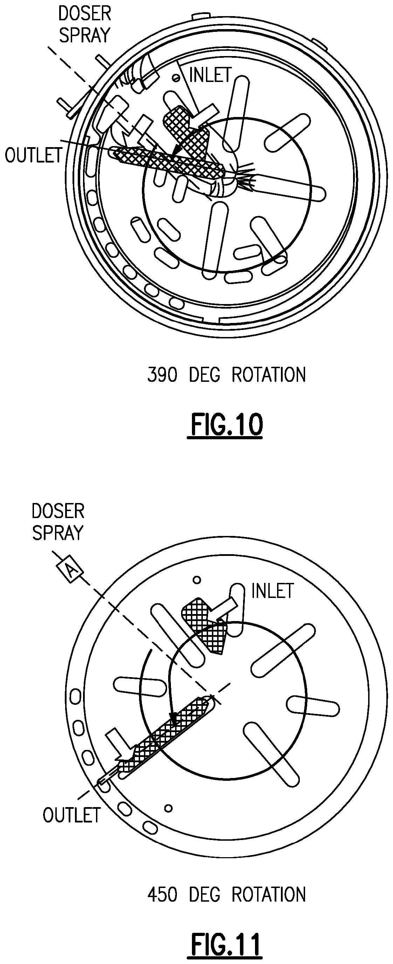

The mixer 30 includes an intermediate plate 100 (Figure 5) positioned between the upstream 50 and downstream 52 baffles, as shown in Figure 7, to block direct flow from the primary inlet opening 60 to the primary outlet opening 64. The intermediate plate 100 initiates a rotational flow path that directs the majority of exhaust gases exiting the primary inlet opening 60 through a rotation of more than 360 degrees about the mixer central axis A before exiting the primary outlet opening 64. In one example shown in Figure 10, the rotation is approximately 390 degrees. In another example shown in Figure 11, the rotation is approximately 450 degrees. This increased degree of rotation results in more thorough mixing of the reducing agent within the exhaust gas. Also, this more thorough mixing occurs without having to increase the overall length of the mixer.

As shown in Figure 7, the intermediate plate 100 is positioned axially between the primary inlet opening 60 and primary outlet opening 64. This prevents a short circuit path of exhaust gas directly from the primary inlet opening 60 and primary outlet opening 64. Instead, the exhaust gas enters the primary inlet opening 60 and is directed by the intermediate plate 100 to move along the rim 72 to generate the rotational mixing.

As shown in Figures 5-6, the intermediate plate 100 has an apex 102 near the mixer central axis A and which widens radially outward in a direction toward the outer peripheral wall 54. The intermediate plate 100 comprises a flat portion 104 defined by a first edge 106 extending radially outward from the apex 102, a second edge 108 extending radially outward from the apex 102 and circumferentially spaced from the first edge 106, and an outer peripheral edge 110 connecting the first 106 and second 108 edges to define a wedge-shape. The first edge 106 comprises an inlet side of the intermediate plate 100 and the second edge 108 comprises the outlet side of the intermediate plate 100. The angle defined by edge 106 and edge 108 can vary from 70 degrees to 270 degrees. The flat portion 104 can have an adjacent helical portion at the outlet side, which is the edge 108.

In one example, the intermediate plate 100 includes a flange portion 112 that extends in an upstream direction from the outer peripheral edge 110. The flange portion 112 does not extend along the entire outer peripheral edge 110. The intermediate plate 100 is attached as part of a sub-assembly 114 that additionally includes a cone plate 116 and a manifold 118 that are used to mount the doser 36 in the desired orientation position. As shown in Figure 5, the intermediate plate 100 is attached to the cone plate 116 with a weld 120 that extends along a portion of the flange portion 112 and a portion of the outer peripheral edge 110. One or more additional welds (not shown) are used to attach the manifold 118 to the intermediate plate 100 and cone plate 116.

The sub-assembly 114 is then placed within the mixer 30 such that the flange portion 112 of the intermediate plate can be welded, or otherwise attached, to the rim 72 of the downstream baffle 52 as shown at 122 in Figure 6. Optionally, the plate 100 may not include a flange portion and the outer peripheral edge 110 could be welded to the rim.

The outer peripheral wall 54 of the mixer 30 includes a doser mount area with a doser opening 124 to receive the doser 36. The upstream and downstream baffles 50, 52 are spaced apart from each other in an axial direction along a length of the mixer 30. The doser opening 124 for the doser 36 is positioned to spray the reducing agent into an area between the upstream baffle 50 and the intermediate plate 100.

In the example shown, the outlet side of the intermediate plate 100, i.e. the second edge 108, is aligned with the transition line 107 of the flat portion 74 of the downstream baffle 52. A weld 122 can be used to fix the second edge 108 to the transition line 107 and the flange 112 to the rim 72. Thus, the intermediate plate 100 partially overlaps the flat portion 74 and extends circumferentially beyond the primary outlet opening 64. This effectively blocks any exhaust gas entering through the primary inlet opening 60 from immediately exiting the primary outlet opening 64 (Figure 7-8).

As shown in Figure 9, the mixer 30 defines a mixer center axis A extending along a length of the mixer 30. The doser 36 defines a central doser axis D that is slightly offset relative to the center axis A of the mixer 30, i.e. axis D does not intersect axis A. The orientation of the primary outlet opening 64 is defined by axis O. From axis D to axis O, the flow can follow 390 degrees of rotation (Figure 10).

In one example embodiment, the intermediate plate 100 has the wedge-shape formed by the sides 106, 108 which are separated from each other by approximately 90 degrees. In an optional embodiment, the transition line 105 of the outlet baffle can be aligned with the inlet side 106 of the intermediate plate 100 in order to form a wedge-shape having sides 106 and 108 separated by approximately 150 degrees. This would be possible rotating the outlet baffle 52 by an additional 60 degrees resulting in a mixer having 450 degrees of rotation (Figure 11).

As such, a compact mixer 30 is provided that allows at least 360 degrees of flow path between axis D and axis O in order to increase mixing performance and DEF transformation. This improved performance is provided without increasing the axial length of the mixer and, further, does not adversely affect back pressure. For example, this 360 to 450 degree rotation flow path is provided within a mixer having an overall length that is between 17 cm to 25 cm (7 and 10 inches).

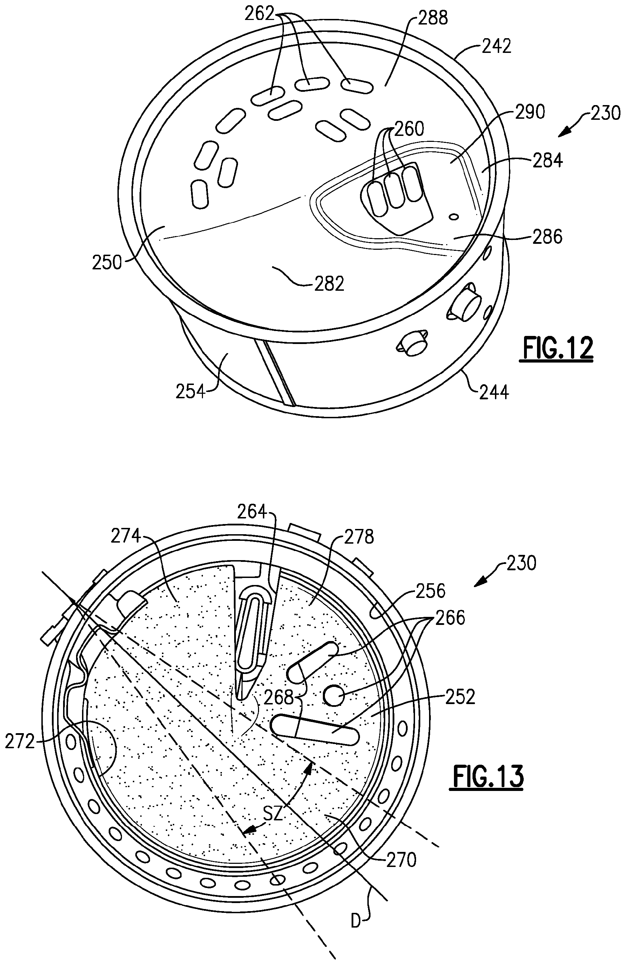

Another example of a mixer 230 is shown in Figure 12. In this example, the mixer 230 comprises a mixer body having an inlet end 242 configured to receive the engine exhaust gases and an outlet end 244 to direct a mixture of swirling engine exhaust gas and products transformed from urea to the SCR catalyst 22. Further, the mixer body includes an upstream baffle 250 (Figure 12) and a downstream baffle 252 (Figure 13) that are surrounded by an outer peripheral wall 254 of a ring-shaped structure. The upstream baffle 250 is configured to initiate swirling of the exhaust gas flow. The ring-shaped structure also includes an inner peripheral surface 256.

The upstream baffle 250 has an upstream end portion 288 and a downstream end portion 286 with a helical portion 282 transitioning between the upstream end portion 288 and the downstream end portion 286. An outer rim 284 is formed about an outer perimeter of the upstream baffle 250. The upstream end portion 288 provides a generally large flat area and the downstream end portion 286 comprises a generally smaller flat area that is offset from the flat area of the upstream end portion 288 in a direction along the axis A. The helical portion 282 comprises a surface that transitions between the two offset flat areas to facilitate the swirling motion.

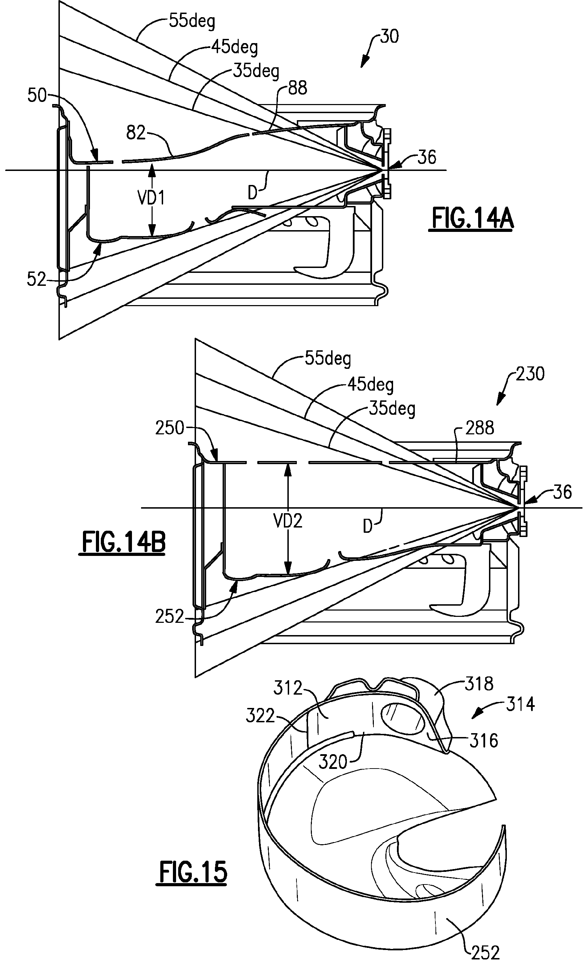

In the example shown, the flat area of the upstream end portion 288 comprises approximately at least 180 degrees, i.e. about half, of the surface area of the upstream baffle 250, with the helical portion 282 and flat area of the downstream end portion 286 comprising the other 180 degrees, i.e. the other half. Figure 14A, which corresponds to the embodiment of the upstream baffle 50 shown in Figure 2A, can be compared to Figure 14B, which corresponds to the upstream baffle 250 as shown in Figure 12. In the Figure 14A embodiment, the end portion at the upstream end 88 is much smaller than the flat portion for the Figure 14B embodiment, and the helical portion 82 has a more gradual slope transitioning from the upstream end 88 to the downstream end 86. Figure 14B, which has the flat area extending over at least 180 degrees, has a helical portion 282 with a much steeper slope than the embodiment of Figure 14A. This provides for more room in a vertical direction within the mixing area of the mixer 230.

The doser axis D is shown in both Figures 14A and 14B. In the Figure 14A embodiment of the mixer 30 there is a first vertical distance VD1 between the baffles 50, 52. In the Figure 14B embodiment of the mixer 230 there is a second vertical distance VD2 between the baffles 250, 252 that is greater than the first vertical distance VD1. It is clear from Figures 14A and 14B, that the doser axis D, which corresponds generally to a center of a spray zone SZ (Figure 13), intersects with the upstream baffle 50 of the mixer 30 much sooner than the axis D intersects the upstream baffle 250 of the mixer 230 of Figure 14B. This improves the amount of penetration of the spray into the mixer 230 as there is more room as compared to the mixer 30 of Figure 2A.

The upstream baffle 250 also includes a vertical wall 290 that extends from the upstream portion 288 to the downstream portion 286, and which has the primary exhaust gas inlet into the mixer 230. Instead of having one large primary inlet opening 60 in the upstream baffle 50 (Figure 2A), this configuration includes a plurality of primary inlet openings 260 in the wall 290 of the upstream baffle 250 that receive the majority of the exhaust gas (for example, the primary inlet openings 260 receive 60% of the exhaust mass flow rate. The upstream baffle 250 also includes a plurality of secondary inlet openings 262 that ensure optimal homogenization of exhaust gases and reduces back pressure. The upstream baffle 250 and the inlet openings 260, 262 cooperate to initiate a swirling motion to the exhaust gas as the exhaust gas enters the inlet end 242 of the mixer 230.

As discussed above, the primary inlet openings 260 are formed within the wall 290. The flat area of the upstream end portion 288 includes the additional or secondary inlet openings 262. The secondary inlet openings 262 can be the same size and/or shape as the primary inlet openings, or could be slightly smaller and/or have a different shape. In one example, the baffle portion 282 and the flat area of the downstream end portion 286 do not include any secondary inlet openings, i.e. the secondary inlet openings 262 are only formed in the flat area of the upstream end portion 288.

In the example shown in Figure 12, there are three (3) primary inlet openings 260 that are used instead of the single primary inlet opening 60. It should be understood that, depending on the application, only two primary inlet openings 260, or more than three primary inlet openings 260 could be used. In one example, the primary inlet openings 260 have an elongated shape, such as a slot shape, with a larger dimension in a first direction to define a slot length, and a smaller dimension in a second direction to define a slot height. In the example shown, the larger dimension extends along the wall 290 in a direction that is from the flat area of the downstream end portion 286 toward the flat area of the upstream end portion 288.

In the example shown, the primary inlet openings 260 are the same size and are spaced apart from each other along the wall 290 in a radial direction. The openings 260 could also be orientated in a different configuration and have different sizes. One benefit have having multiple primary inlet openings 260 as opposed to a single large inlet opening is that the multiple inlet openings 260 help reduce the force of exhaust gas applied against the spray, which reduces the amount of spray that would be forced against the inner peripheral surface 256.

As shown in Figure 13, the downstream baffle 252 includes a large primary outlet opening 264 through which the majority of the exhaust gas exits. The downstream baffle 252 also includes one or more secondary outlet openings 266 surrounded by lips 268 through which the exhaust gas exits. The lips 268 keep the urea inside the mixer 230 to increase DEF transformation and generate additional turbulence to further improve mixing performance.

The downstream baffle 252 has an upstream end portion 274 and a downstream end portion 278 with a helical portion 270 transitioning between the upstream end portion 274 and the downstream end portion 278. An outer rim 272 is formed about an outer perimeter of the downstream baffle 252. The upstream end portion 274 comprises a flat area that transitions to a flat area at the downstream end portion 278 via the helical portion 270. The two flat areas are offset from each other in a direction along the axis A. The helical portion 270 comprises a surface that transitions between the two offset flat areas to facilitate the swirling motion. The downstream baffle 252 also includes a vertical wall 280 that extends from the upstream portion 274 to the downstream portion 278, and which has the primary outlet opening 264 that is larger than the secondary outlet openings 266. In the example shown, the primary outlet opening 264 comprises an open area formed within the vertical offset between the flat areas of the upstream end portion 274 and downstream end portion 278.

In the example shown, at least 180 degrees, i.e. at least half, of the downstream baffle has a solid surface, i.e. there are no secondary outlet openings 266. This solid surface of the downstream baffle 252 is aligned with the doser axis D such that a spray zone SZ extends over this solid surface as shown in Figure 13. The secondary openings 266 are thus formed in the downstream end portion 278 adjacent the primary outlet opening 264 and do not overlap the spray zone SZ. In the example shown, there are three secondary openings 266, each having a different size. Further, at least one opening is slot shaped and at least one opening is circular shaped; however, various combinations of shapes and sizes could be used. Further, it should be understood that more or less than three secondary openings could also be used depending upon the application.

With the mixer 230 as shown in Figures 12-13, the flat portion 104 of the intermediate plate 100 (Figure 7) is no longer positioned between the baffles 250, 252. Instead, as shown in Figure 15, a sub-assembly 314 comprising a cone plate 316 and a manifold 318 are used in a manner that is similar to the cone plate 116 and manifold 118 of the mixer 30 as shown in Figures 5-6. The cone plate 316 is modified to include a wall portion 312 that is similar to the flange portion 112 of the mixer 30.

The manifold 318 is attached to the cone plate 316 in a manner similar to that described above with regard to the mixer 30. The sub-assembly 314 is then attached to the downstream baffle 252 with a first weld 320 along a circumferential edge of the cone plate 316 and with a second weld 322 along the wall portion 312. It should be understood that while welding interfaces are shown, other attachment methods could also be used, such as brazing for example.

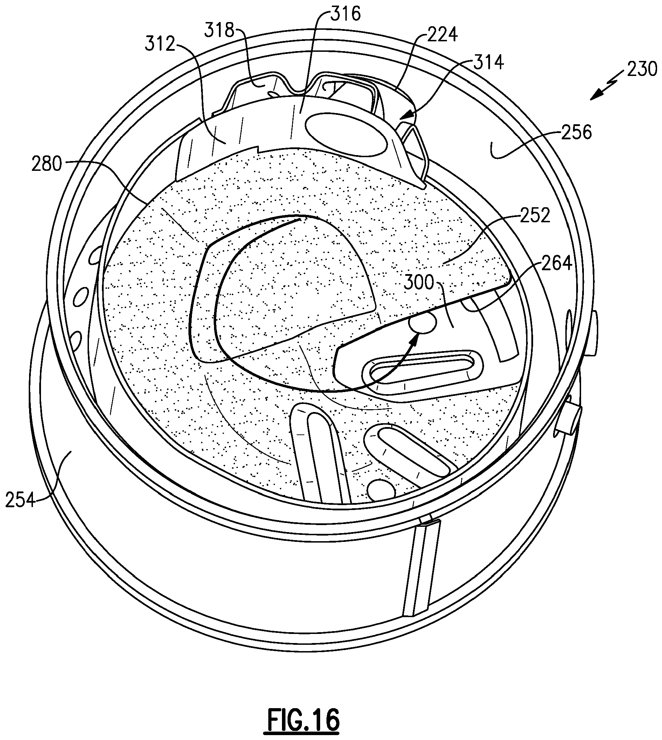

As shown in Figure 16, the outer peripheral wall 254 of the mixer 230 includes a doser mount area with a doser opening 224 to receive the doser 36. The upstream and downstream baffles 250, 252 are spaced apart from each other in an axial direction along a length of the mixer 230. The doser opening 224 for the doser 36 is positioned to spray the reducing agent into an area between the upstream baffle 250 and the downstream baffle 252.

When the mixture of spray and exhaust gas exits the primary outlet opening 264 of the downstream baffle 252, the mixture is directed against an extension baffle 300. Thus, the extension baffle 300 is located within the mixer 230 at a location that is downstream of the outlet or downstream baffle 252. The use of extension baffle 300 at this location improves flow distribution and results in better performance for the mixer 230 as compared to the mixer 30.

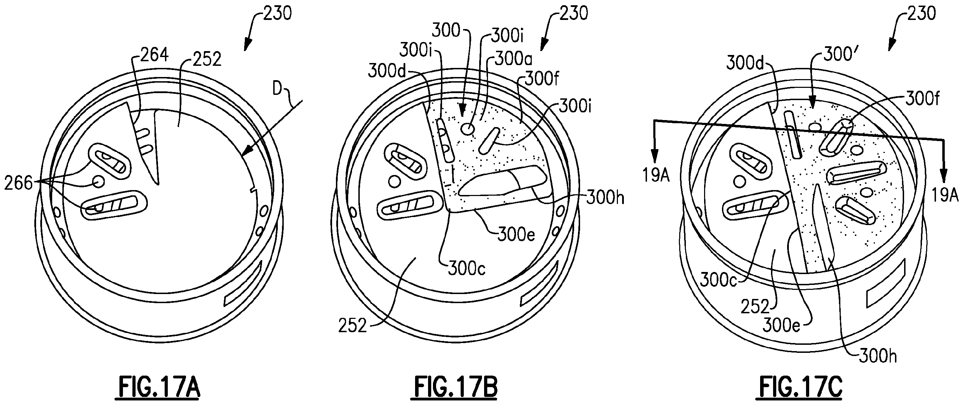

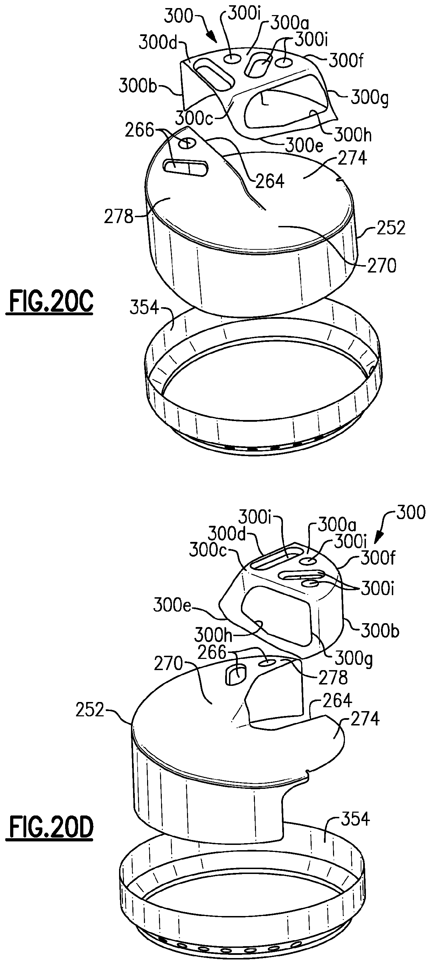

Figure 17A shows a view from the outlet end of the mixer 230 without the extension baffle 300. Figure 17B shows a first embodiment of the extension baffle 300 where the baffle 300 is configured to overlap approximately 90 degrees of the downstream baffle 252. Figure 17C shows a second embodiment of the extension baffle 300' where the baffle 300' is configured to overlap approximately 180 degrees of the downstream baffle. In each embodiment, the extension baffle 300, 300' includes a generally flat base 300a with circumferential wall portion 300b (Figures 20C-D) extending in an upstream direction from an outer peripheral edge of the base 300a.

The flat base 300a comprises a wedge shape that has an apex or center 300c near the mixer central axis A and which widens radially outward in a direction toward the outer peripheral wall 254. The flat base 300a is defined by a first edge 300d extending radially outward from the apex 300c, a second edge 300e extending radially outward from the apex 300c and circumferentially spaced from the first edge 300d, and an outer peripheral edge 300f connecting the first 300d and second 300e edges. The first edge 300d comprises an inlet side or upstream side of the extension baffle 300 and the second edge 300e comprises an outlet side or downstream side of the extension baffle 300. In the example shown, the angle defined by the edges 300d, 300e is approximately 90 degrees; however the angle could be increased or decreased as needed dependent upon the application.

As discussed above, the circumferential wall portion 300b extends in the upstream direction from the outer peripheral edge 300f. A radial wall portion 300g extends in the upstream direction from the second edge 300e of the flat base 300a. The radial wall portion 300g includes a large primary outlet opening 300h through which a majority of the mixture of exhaust gas and reducing agent exits the mixer 230. The base 300a includes one or more secondary outlet openings 300i which are smaller in size than the primary outlet opening 300h. The secondary outlet openings 300i can be circular or slot shaped, or any combination thereof. Other shapes and different size configurations could also be used. Further, while two slot shaped openings and one circular shaped opening are shown in Figure 17B, fewer or more openings in any shape or size combination, could also be used dependent upon the application.

The extension baffle 300' of Figure 17C is similar to that of the baffle 300 of Figure 17B, but the angle defined by the edges 300d, 300e has been increased to approximately 180 degrees. It should be understood that the angle could be modified to be anywhere between 90 and 180 degrees and could also be increased above 180 degrees or decreased below 90 degrees as needed dependent upon the application.

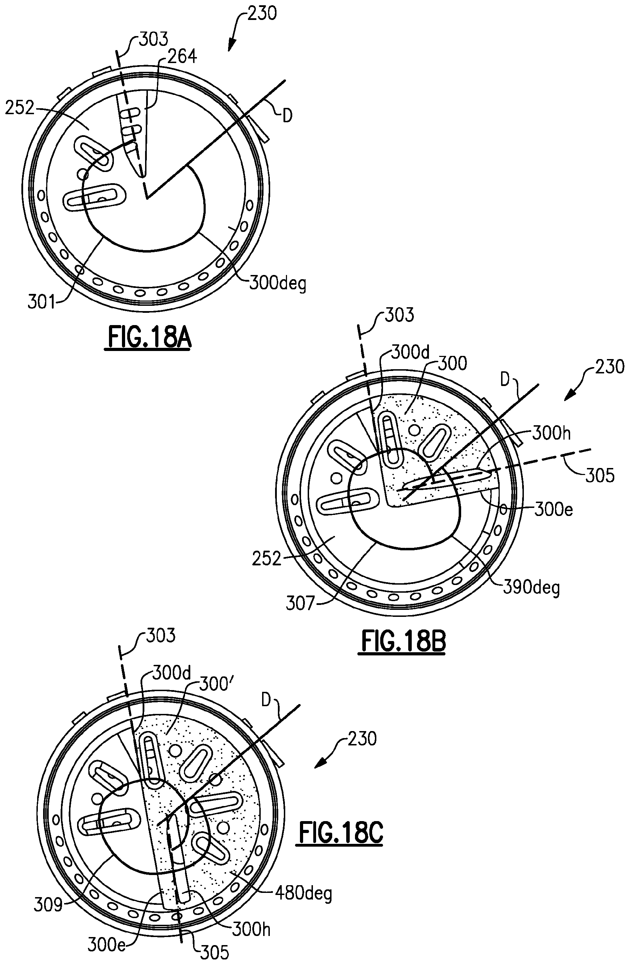

Figure 18A shows the view from the mixer outlet with the primary outlet opening 264 of the downstream baffle 252 being shown in relation to the doser axis D. As indicated by the arrow 301, from an upstream location at the doser axis D to a downstream location at a center axis 303 of the outlet opening 264, there is less than 360 degrees rotation (approximately 300 degrees of rotation is shown in Figure 18A). The embodiments of Figure 18C provide for significantly more rotation prior to the mixture exiting the mixer 230.

Figure 18B shows a relationship between an outlet from the mixer 230 and the doser axis D for the extension baffle 300 configuration of Figure 17B. The upstream or first edge 300d of the flat base 300a is generally aligned along the center axis 303 of the primary outlet opening 264 of the downstream baffle 252. The primary outlet opening 300h of the extension baffle 300 defines a center axis 305. As indicated by the arrow 307, from an upstream location at the doser axis D to a downstream location at the center axis 305 of the outlet opening 300h of the extension plate 300, there is approximately 390 degrees rotation, which is a significant improvement over the amount of rotation shown in Figure 18A. Figure 18C provides for even more rotation as indicated by the arrow 309, where from an upstream location at the doser axis D to a downstream location at the center axis 305 of the outlet opening 300h of the extension plate 300', there is approximately 480 degrees rotation.

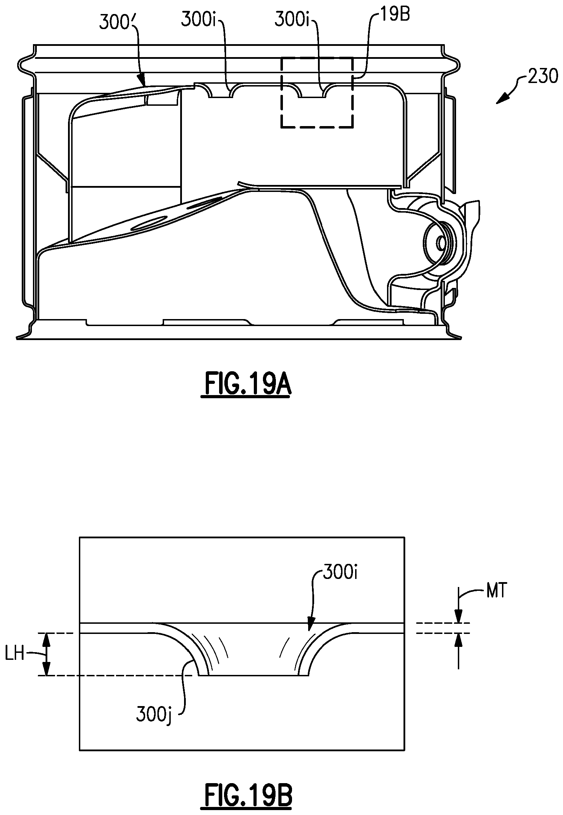

Figure 19A is a section view taken as indicated by line 19A in Figure 17C. This section view is taken through the secondary openings 300i in the extension baffle 300' which are each surrounded by a lip 300j. The lips 300j completely surround each opening 300i and extend in an upstream direction. As shown in the magnified view of Figure 19B, each lip 300j has a lip height LH that extends outwardly from the base 300a to a distal end of the lip 300j. The extension baffle 300 has a material thickness MT. In the example shown, the lip height LH is at least three times the material thickness MT. This relationship results in improved performance compared to prior configurations with shorter lips or no lips. It should be understood that the lip configuration for the extension baffle 300' as shown in Figure 17C could also be used for the lips 300j in the extension baffle 300. Further, the relationship of the lip height being three times the material thickness is also an option used for the lips 268 in the secondary openings 262, 266 for the upstream 250 and downstream 252 baffles. In one example, the lips 300j extend to completely surround the respective opening.

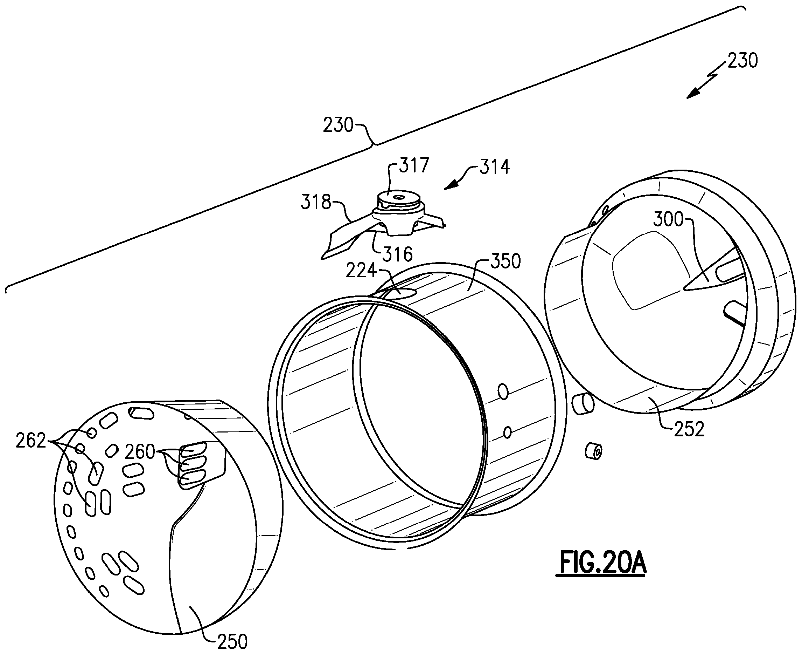

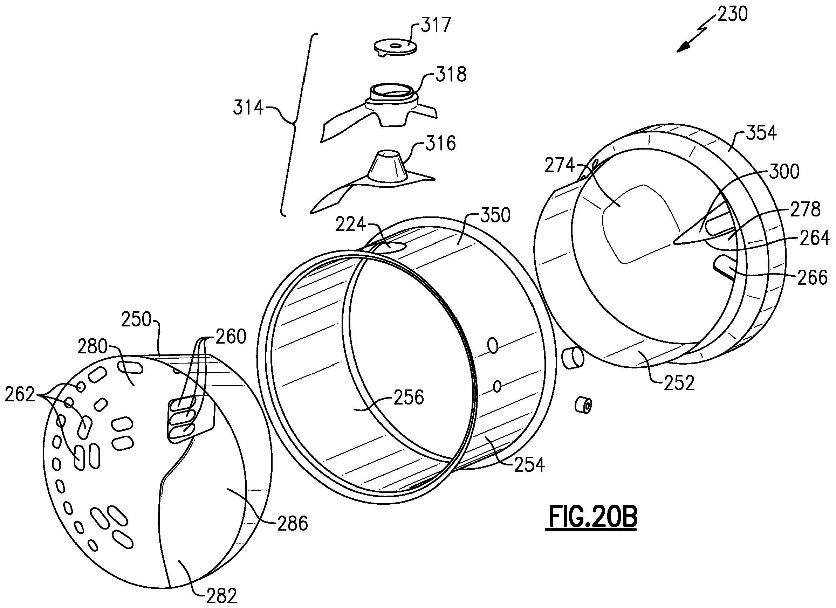

Figures 20A-D show exploded views of the mixer 230 that correspond to the configuration shown in Figures 12 and 17B. The upstream baffle 250 and the downstream baffle 252 are mounted to a ring-shaped structure 350 which includes the doser opening 224. The sub-assembly 314 of the cone plate 316 and manifold 318 is associated with the doser opening 224. Figure 20B shows an exploded view of the sub-assembly 314. A mounting plate 317 for the doser 36 is attached to the manifold 318 and cone plate 316 assembly. Figures 20C-D show an exploded view of the downstream baffle 252 and extension baffle 300. An additional mounting ring 354 can be used to second these components to the rest of the assembly as shown in Figures 20A-B.

The subject invention provides a compact mixer that allows 300 up to 480 or greater degrees of flow rotation in order to increase mixing performance and DEF transformation. Further, as discussed above, this improved performance is provided without increasing the axial length of the mixer and, further, does not adversely affect back pressure. For example, this significant amount of rotation is provided within a mixer having an overall length that is between 17 cm to 25 cm (7 and 10 inches).

Although an embodiment of this invention has been disclosed, a worker of ordinary skill in this art would recognize that certain modifications would come within the scope of this invention. For that reason, the following claims should be studied to determine the true scope and content of this invention.

## Claims

1. A mixer (30, 230) for a vehicle exhaust system comprising:
a mixer body defining a mixer central axis (A) and having an inlet configured to receive engine exhaust gas and an outlet;
an upstream baffle (50, 250) positioned within the mixer body and including one primary inlet opening (60) that is a large inlet that can receive the majority of the exhaust gas or a plurality of primary inlet openings (260) that can receive the majority of the exhaust gas,
and a plurality of perforations, slots or additional inlet openings (62, 262);
a downstream baffle (52, 252) positioned within the mixer body to be spaced from the upstream baffle (50, 250) in a direction along the mixer central axis (A);
a doser (36) defining a doser axis (D) and being positioned to spray a reducing agent into an area between the upstream baffle (50, 250) and the downstream baffle (52, 252) such that a mixture of reducing agent and exhaust gas can exit the outlet (20); and
wherein the mixer (30, 230) is configured such that the mixture moves through a rotational flow path that is at least 360 degrees before exiting the outlet,
wherein the upstream baffle (50, 250) includes a helical portion (82, 282) with a rim (84, 284) formed about an outer perimeter of the helical portion (82) of the upstream baffle (50, 250) that has an upstream end portion (88) and a downstream end portion (86) and a wall (90) that extends from the upstream end portion (88) to the downstream end portion (86) and wherein the at least one primary inlet opening (60, 260) is formed within the wall (90, 290) to initiate a swirling motion of the engine exhaust gas as the engine exhaust gas enters the inlet of the mixer body in order to increase mixing performance without increasing an axial length of the mixer body,
wherein the downstream baffle (52, 252) includes at least one primary outlet opening (64, 264), the primary outlet opening (64, 264) being a large opening through which the majority of the exhaust gas exits, **characterized in that** the downstream baffle (52, 252) further includes
a plurality of additional outlet openings (66, 266) surrounded by lips (68, 268), a helical portion (70, 270) that is formed by an upstream end portion (74, 274) and a downstream end portion (78, 278) that each include a flat surface portion with the helical portion (70, 270) extending there between and a wall that extends between the downstream end portion and the upstream end portion, and wherein the at least one primary outlet opening (64, 264) is formed in the wall (80, 280), and **in that** the mixer (30, 230) further includes an intermediate plate (100) positioned between the upstream and downstream baffles (50, 52, 250, 252) to block direct flow from directly flowing from the primary inlet opening (60, 260) to the primary outlet opening (64, 264), and wherein the intermediate plate (100) initiates the rotational flow path that directs exhaust gases exiting the primary inlet opening (60, 260) through a rotation of more than 360 degrees about the mixer central axis (A) before exiting the primary outlet opening (64, 264).

2. The mixer (30, 230) according to claim 1 including an extension baffle (300) positioned within the mixer body downstream of the downstream baffle (52, 250), the extension baffle (300) including at least one main outlet opening (300h) such that from an upstream location between the upstream baffle (50, 250) and downstream baffle (52, 252) at the doser axis (D) to a downstream location at a center axis of the baffle main outlet opening (300h), the mixture goes through at least 390 degrees rotation.

3. The mixer (30, 230) according to claim 2 wherein the extension baffle comprises (300) a generally flat base (300a) with circumferential wall portion (254) extending in an upstream direction from an outer peripheral edge of the base (300a), and wherein the base has a center near the mixer central axis (A) and widens outwardly in a direction toward the circumferential wall portion (254), and wherein the base (300a) is defined by a first edge (300d) extending radially outward from the center and a second edge (300e) extending radially outward from the center and circumferentially spaced from the first edge (300d).

4. The mixer (30, 230) according to claim 3 wherein the angle defined between the first and second edges (300d, 300e) is at least 90 degrees, preferably at least 180 degrees such that the mixture goes through at least 480 degrees rotation.

5. The mixer (30, 230) according to claim 3 or 4 wherein the first edge (300d) comprises an inlet side or upstream side of the extension baffle (300) and the second edge (300e) comprises an outlet side or downstream side of the extension baffle (300), and wherein a radial wall portion (300g) extends in the upstream direction from the second edge (300e) of the flat base (300a), and wherein the radial wall portion (300g) includes the extension baffle main outlet opening (300h).

6. The mixer (30, 230) according to claim 5 wherein the extension baffle (300) includes at least one secondary opening (300i) formed in the base (300a), wherein the secondary opening (300i) is smaller than the extension baffle main outlet opening (300h), in particular wherein the at least one secondary opening (300i) is surrounded by a lip (300j) that extends away from the base to define a lip height that is at least three times a material thickness of the extension baffle (300).

7. The mixer (30, 230) according to any one of claims 3 to 6 wherein the first edge (300d) of the extension baffle (300) is generally aligned with the primary outlet opening (64, 264) of the downstream baffle (52, 252) in a direction along the mixer central axis (A).

8. The mixer (30, 230) according to any one of the preceding claims wherein at least one of the upstream baffle (50, 250) and the downstream baffle (52, 250) includes at least one secondary opening (62, 66, 262, 266) that includes a lip (68, 268), and wherein the lip (68, 268) extends away from a respective one of the upstream baffle (50, 250) and the downstream baffle (52, 252) to define a lip height that is at least three times a material thickness of the respective one of the upstream baffle (50, 250) and the downstream baffle (52, 252).

9. The mixer (30, 230) according to claim 1 wherein the upstream end portion (88) comprises at least half of the upstream baffle (50, 250), in particular wherein the upstream baffle (52, 250) includes a plurality of secondary inlet openings (62, 262) that are only formed within the upstream end portion (88) with a remaining portion of the upstream baffle (50, 250) being free from secondary inlet openings (62, 262).

10. The mixer (30, 230) according to claim 1 wherein at least half of the downstream baffle (52, 252) has a solid surface free from secondary outlet openings (66, 266), and wherein the solid surface of the downstream baffle (52, 252) is aligned with the doser axis (D) such that a spray zone defined by the doser (36) extends over the solid surface without encountering any secondary outlet openings (66, 266).

11. The mixer (30, 230) according to any one of the preceding claims wherein including a sub-assembly (314) comprising a cone plate (316) and a manifold (318) that are mounted to the mixer body to position the doser (36) at a desired orientation, in particular wherein the cone plate (316) includes a circumferential wall portion that surrounds an opening for a cone and which is attached to the downstream baffle (52, 252), and wherein the manifold (318) is attached to an outwardly facing side of the cone plate (316) to at least partially surround the cone.

## Patentansprüche

1. Mischer (30, 230) für eine Fahrzeugabgasanlage, mit:
einem Mischerkörper, der eine Mischermittelachse (A) definiert und einen zur Aufnahme von Motorabgas eingerichteten Einlass sowie einen Auslass aufweist,
einem innerhalb des Mischerkörpers positionierten stromaufwärtigen Leitblech (50, 250), das eine primäre Einlassöffnung (60), bei der es sich um einen großen Einlass handelt, der den Großteil des Abgases aufnehmen kann, oder mehrere primäre Einlassöffnungen (260), die den Großteil des Abgases aufnehmen können, und mehrere Perforationen, Schlitze oder zusätzliche Einlassöffnungen (62, 262) aufweist,
einem stromabwärtigen Leitblech (52, 252), das innerhalb des Mischerkörpers so positioniert ist, dass es in einer Richtung längs der Mischermittelachse (A) vom stromaufwärtigen Leitblech (50, 250) beabstandet ist,
einem Dosierer (36), der eine Dosiererachse (D) definiert und so positioniert ist, dass er ein Reduktionsmittel so in einen Bereich zwischen dem stromaufwärtigen Leitblech (50, 250) und dem stromabwärtigen Leitblech (52, 252) sprüht, dass ein Gemisch aus Reduktionsmittel und Abgas aus dem Auslass (20) austreten kann, und
wobei der Mischer (30, 230) so eingerichtet ist, dass sich das Gemisch durch einen Rotationsströmungsweg bewegt, der wenigstens 360 Grad beträgt, bevor es aus dem Auslass austritt,
wobei das stromaufwärtige Leitblech (50, 250) einen wendelförmigen Abschnitt (82, 282) mit einem Rand (84, 284) aufweist, der um einen Außenumfang des wendelförmigen Abschnitts (82) des stromaufwärtigen Leitblechs (50, 250) gebildet ist, der einen stromaufwärtigen Endabschnitt (88) und einen stromabwärtigen Endabschnitt (86) sowie eine Wand (90) aufweist, die sich vom stromaufwärtigen Endabschnitt (88) zum stromabwärtigen Endabschnitt (86) erstreckt, und wobei die wenigstens eine primäre Einlassöffnung (60, 260) so in der Wand (90, 290) gebildet ist, dass sie eine Wirbelbewegung des Motorabgases einleitet, wenn das Motorabgas in den Einlass des Mischerkörpers eintritt, um die Mischleistung zu erhöhen, ohne eine axiale Länge des Mischerkörpers zu vergrößern,
wobei das stromabwärtige Leitblech (52, 252) wenigstens eine primäre Auslassöffnung (64, 264) aufweist, wobei die primäre Auslassöffnung (64, 264) eine große Öffnung ist, durch die der Großteil des Abgases austritt,
**dadurch gekennzeichnet, dass** das stromabwärtige Leitblech (52, 252) ferner mehrere zusätzliche Auslassöffnungen (66, 266), die von Lippen (68, 268) umgeben sind, einen wendelförmigen Abschnitt (70, 270), der von einem stromaufwärtigen Endabschnitt (74, 274) und einem stromabwärtigen Endabschnitt (78, 278) gebildet ist, die jeweils einen Abschnitt mit flacher Oberfläche aufweisen, wobei sich der wendelförmige Abschnitt (70, 270) dazwischen erstreckt, sowie eine Wand aufweist, die sich zwischen dem stromabwärtigen Endabschnitt und dem stromaufwärtigen Endabschnitt erstreckt, und wobei die wenigstens eine primäre Auslassöffnung (64, 264) in der Wand (80, 280) gebildet ist, und
dass der Mischer (30, 230) ferner eine Zwischenplatte (100) aufweist, die so zwischen dem stromaufwärtigen und dem stromabwärtigen Leitblech (50, 52, 250, 252) positioniert ist, dass sie eine direkte Strömung blockiert, so dass diese nicht direkt von der primären Einlassöffnung (60, 260) zur primären Auslassöffnung (64, 264) strömt, und wobei die Zwischenplatte (100) den Rotationsströmungsweg einleitet, der aus der primären Einlassöffnung (60, 260) austretende Abgase durch eine Rotation von mehr als 360 Grad um die Mischermittelachse (A) leitet, bevor sie aus der primären Auslassöffnung (64, 264) austreten.

2. Mischer (30, 230) nach Anspruch 1, der ein Erweiterungsleitblech (300) aufweist, das innerhalb des Mischerkörpers stromabwärts des stromabwärtigen Leitblechs (52, 250) positioniert ist, wobei das Erweiterungsleitblech (300) wenigstens eine Hauptauslassöffnung (300h) aufweist, derart, dass das Gemisch von einer stromaufwärtigen Stelle zwischen dem stromaufwärtigen Leitblech (50, 250) und dem stromabwärtigen Leitblech (52, 252) an der Dosiererachse (D) bis zu einer stromabwärtigen Stelle an einer Mittelachse der Leitblechhauptauslassöffnung (300h) eine Rotation von mindestens 390 Grad durchläuft.

3. Mischer (30, 230) nach Anspruch 2, wobei das Erweiterungsleitblech (300) eine insgesamt flache Basis (300a) mit einem Umfangswandabschnitt (254) umfasst, der sich in einer stromaufwärtigen Richtung von einem Außenumfangsrand der Basis (300a) erstreckt, und wobei die Basis einen Mittelpunkt nahe der Mischermittelachse (A) hat und nach außen in Richtung auf den Umfangswandabschnitt (254) breiter wird, und wobei die Basis (300a) durch einen ersten Rand (300d), der sich vom Mittelpunkt radial nach außen erstreckt, und einen zweiten Rand (300e) definiert ist, der sich vom Mittelpunkt radial nach außen erstreckt und in Umfangsrichtung vom ersten Rand (300d) beabstandet ist.

4. Mischer (30, 230) nach Anspruch 3, wobei der zwischen dem ersten und dem zweiten Rand (300d, 300e) gebildete Winkel mindestens 90 Grad, vorzugsweise mindestens 180 Grad beträgt, derart, dass die Mischung eine Rotation von mindestens 480 Grad durchläuft.

5. Mischer (30, 230) nach Anspruch 3 oder 4, wobei der erste Rand (300d) eine Einlassseite bzw. stromaufwärtige Seite des Erweiterungsleitblechs (300) umfasst und der zweite Rand (300e) eine Auslassseite bzw. stromabwärtige Seite des Erweiterungsleitblechs (300) umfasst, und wobei ein radialer Wandabschnitt (300g) vom zweiten Rand (300e) der flachen Basis (300a) in stromaufwärtiger Richtung verläuft und wobei der radiale Wandabschnitt (300g) die Erweiterungsleitblechhauptauslassöffnung (300h) aufweist.

6. Mischer (30, 230) nach Anspruch 5, wobei das Erweiterungsleitblech (300) wenigstens eine sekundäre Öffnung (300i) aufweist, die in der Basis (300a) gebildet ist, wobei die sekundäre Öffnung (300i) kleiner als die Erweiterungsleitblechhauptauslassöffnung (300h) ist, insbesondere wobei die wenigstens eine sekundäre Öffnung (300i) von einer Lippe (300j) umgeben ist, die sich so von der Basis weg erstreckt, dass eine Lippenhöhe definiert ist, die wenigstens das Dreifache einer Materialstärke des Erweiterungsleitblechs (300) beträgt.

7. Mischer (30, 230) nach einem der Ansprüche 3 bis 6, wobei der erste Rand (300d) des Erweiterungsleitblechs (300) in einer Richtung längs der Mischermittelachse (A) insgesamt auf die primäre Auslassöffnung (64, 264) des stromabwärtigen Leitblechs (52, 252) ausgerichtet ist.

8. Mischer (30, 230) nach einem der vorhergehenden Ansprüche, wobei das stromaufwärtige Leitblech (50, 250) und/oder das stromabwärtige Leitblech (52, 250) wenigstens eine sekundäre Öffnung (62, 66, 262, 266) aufweist, die eine Lippe (68, 268) aufweist, und wobei sich die Lippe (68, 268) vom stromaufwärtigen Leitblech (50, 250) bzw. vom stromabwärtigen Leitblech (52, 252) so weg erstreckt, dass eine Lippenhöhe definiert ist, die wenigstens das Dreifache einer Materialstärke des stromaufwärtigen Leitblechs (50, 250) bzw. des stromabwärtigen Leitblechs (52, 252) beträgt.

9. Mischer (30, 230) nach Anspruch 1, wobei der stromaufwärtige Endabschnitt (88) wenigstens die Hälfte des stromaufwärtigen Leitblechs (50, 250) umfasst, insbesondere wobei das stromaufwärtige Leitblech (52, 250) mehrere sekundäre Einlassöffnungen (62, 262) aufweist, die nur innerhalb des stromaufwärtigen Endabschnitts (88) gebildet sind, wobei ein übriger Abschnitt des stromaufwärtigen Leitblechs (50, 250) frei von sekundären Einlassöffnungen (62, 262) ist.

10. Mischer (30, 230) nach Anspruch 1, wobei wenigstens die Hälfte des stromabwärtigen Leitblechs (52, 252) eine durchgehende Oberfläche aufweist, die frei von sekundären Auslassöffnungen (66, 266) ist, und wobei die durchgehende Oberfläche des stromabwärtigen Leitblechs (52, 252) so auf die Dosiererachse (D) ausgerichtet ist, dass sich eine vom Dosierer (36) definierte Sprühzone über die durchgehende Oberfläche erstreckt, ohne auf sekundäre Auslassöffnungen (66, 266) zu treffen.

11. Mischer (30, 230) nach einem der vorhergehenden Ansprüche, wobei er eine Unterbaugruppe (314) aufweist, die eine Konusplatte (316) und einen Verteiler (318) umfasst, die am Mischerkörper so angebracht sind, dass der Dosierer (36) in einer gewünschten Ausrichtung positioniert ist, insbesondere wobei die Konusplatte (316) einen Umfangswandabschnitt aufweist, der eine Öffnung für einen Konus umgibt und der am stromabwärtigen Leitblech (52, 252) befestigt ist, und wobei der Verteiler (318) so an einer nach außen gewandten Seite der Konusplatte (316) befestigt ist, dass er den Konus zumindest teilweise umgibt.

## Revendications

1. Mélangeur (30, 230) pour un système d'échappement de véhicule, comprenant :
un corps de mélangeur qui définit un axe médian de mélangeur (A) et qui présente une entrée réalisée pour la réception de gaz d'échappement de moteur et une sortie ;
un déflecteur amont (50, 250) qui est agencé à l'intérieur du corps de mélangeur et présente une ouverture d'entrée primaire (60) qui est une grande entrée apte à recevoir la majorité des gaz d'échappement, ou une pluralité d'ouvertures d'entrée primaires (260) aptes à recevoir la majorité des gaz d'échappement, et une pluralité de perforations, de fentes ou d'ouvertures d'entrée supplémentaires (62, 262) ;
un déflecteur aval (52, 252) agencé à l'intérieur du corps de mélangeur de manière à être à distance du déflecteur amont (50, 250) dans un sens selon l'axe médian de mélangeur (A) ;
un doseur (36) qui définit un axe de doseur (D) et qui est agencé de manière à pulvériser un agent de réduction dans une zone entre le déflecteur amont (50, 250) et le déflecteur aval (52, 252) de sorte qu'un mélange d'agent de réduction et de gaz d'échappement peut s'échapper de la sortie (20) ; et
dans lequel le mélangeur (30, 230) est réalisé de sorte que le mélange se déplace à travers un trajet d'écoulement de rotation d'au moins 360 degrés avant de s'échapper de la sortie,
dans lequel le déflecteur amont (50, 250) présente un tronçon hélicoïdal (82, 282) qui comporte un bord (84, 284) réalisé autour d'un périmètre extérieur du tronçon hélicoïdal (82) du déflecteur amont (50, 250) qui présente un tronçon d'extrémité amont (88) et un tronçon d'extrémité aval (86) et une paroi (90) qui s'étend du tronçon d'extrémité amont (88) au tronçon d'extrémité aval (86), et dans lequel ladite au moins une ouverture d'entrée primaire (60, 260) est réalisée dans la paroi (90, 290) de manière à induire un mouvement tourbillonnaire des gaz d'échappement de moteur lorsque les gaz d'échappement de moteur entrent dans l'entrée du corps de mélangeur, pour augmenter la performance de mélange sans augmenter une longueur axiale du corps de mélangeur,
le déflecteur aval (52, 252) présentant au moins une ouverture de sortie primaire (64, 264), l'ouverture de sortie primaire (64, 264) étant une grande ouverture à travers laquelle la majorité des gaz d'échappement s'échappent,
**caractérisé en ce que** le déflecteur aval (52, 252) présente en outre une pluralité d'ouvertures de sortie supplémentaires (66, 266) entourées par des lèvres (68, 268), un tronçon hélicoïdal (70, 270) qui est formé par un tronçon d'extrémité amont (74, 274) et un tronçon d'extrémité aval (78, 278) présentant respectivement un tronçon de surface plane, le tronçon hélicoïdal (70, 270) s'étendant ici entre eux, et une paroi qui s'étend entre le tronçon d'extrémité aval et le tronçon d'extrémité amont, et ladite au moins une ouverture de sortie primaire (64, 264) étant réalisée dans la paroi (80, 280), et
**en ce que** le mélangeur (30, 230) présente en outre une plaque intermédiaire (100) agencée entre le déflecteur amont et le déflecteur aval (50, 52, 250, 252) pour bloquer un écoulement direct de sorte que celui-ci ne s'écoule pas directement de l'ouverture d'entrée primaire (60, 260) vers l'ouverture de sortie primaire (64, 264), et la plaque intermédiaire (100) induisant le trajet d'écoulement de rotation qui guide des gaz d'échappement s'échappant de l'ouverture d'entrée primaire (60, 260) dans une rotation de plus de 360 degrés autour de l'axe médian de mélangeur (A) avant l'échappement hors de l'ouverture de sortie primaire (64, 264).

2. Mélangeur (30, 230) selon la revendication 1, présentant un déflecteur d'extension (300) agencé à l'intérieur du corps de mélangeur en aval du déflecteur aval (52, 250), le déflecteur d'extension (300) présentant au moins une ouverture de sortie principale (300h) de sorte que le mélange parcourt une rotation d'au moins 390 degrés depuis un point amont entre le déflecteur amont (50, 250) et le déflecteur aval (52, 252) sur l'axe de doseur (D) vers un point aval sur l'axe médian de l'ouverture de sortie principale (300h) du déflecteur.

3. Mélangeur (30, 230) selon la revendication 2, dans lequel le déflecteur d'extension (300) comprend une base généralement plane (300a) présentant un tronçon de paroi circonférentiel (254) qui s'étend dans un sens amont depuis un bord périphérique extérieur de la base (300a), et dans lequel la base présente un centre proche de l'axe médian de mélangeur (A) et s'évase vers l'extérieur dans un sens vers le tronçon de paroi circonférentiel (254), et dans lequel la base (300a) est définie par un premier bord (300d) qui s'étend radialement vers l'extérieur à partir du centre et par un deuxième bord (300e) qui s'étend radialement vers l'extérieur à partir du centre et est espacé du premier bord (300d) dans le sens circonférentiel.

4. Mélangeur (30, 230) selon la revendication 3, dans lequel l'angle défini entre le premier et le deuxième bord (300d, 300e) est égal à au moins 90 degrés, de préférence à au moins 180 degrés, de sorte que le mélange parcourt une rotation de 480 degrés.

5. Mélangeur (30, 230) selon la revendication 3 ou 4, dans lequel le premier bord (300d) comprend un côté d'entrée ou un côté amont du déflecteur d'extension (300) et le deuxième bord (300e) comprend un côté de sortie ou un côté aval du déflecteur d'extension (300), et dans lequel un tronçon de paroi radial (300g) s'étend dans le sens amont depuis le deuxième bord (300e) de la base plane (300a), et dans lequel le tronçon de paroi radial (300g) présente l'ouverture de sortie principale (300h) du déflecteur d'extension.

6. Mélangeur (30, 230) selon la revendication 5, dans lequel le déflecteur d'extension (300) présente au moins une ouverture secondaire (300i) réalisée dans la base (300a), l'ouverture secondaire (300i) étant plus petite que l'ouverture de sortie principale (300h) du déflecteur d'extension, en particulier dans lequel ladite au moins une ouverture secondaire (300i) est entourée par une lèvre (300j) qui s'étend en éloignement de la base pour définir une hauteur de lèvre qui correspond au moins au triple de l'épaisseur de matériau du déflecteur d'extension (300).

7. Mélangeur (30, 230) selon l'une des revendications 3 à 6, dans lequel le premier bord (300d) du déflecteur d'extension (300) est généralement aligné sur l'ouverture de sortie primaire (64, 264) du déflecteur aval (52, 252) dans un sens le long de l'axe médian de mélangeur (A).

8. Mélangeur (30, 230) selon l'une des revendications précédentes, dans lequel le déflecteur amont (50, 250) et/ou le déflecteur aval (52, 250) présente au moins une ouverture secondaire (62, 66, 262, 266) qui présente une lèvre (68, 268), et dans lequel la lèvre (68, 268) s'étend en éloignement du déflecteur amont (50, 250) ou du déflecteur aval (52, 252), respectivement, de manière à définir une hauteur de lèvre qui correspond au moins au triple d'une épaisseur de matériau du déflecteur amont (50, 250) ou du déflecteur aval (52, 252), respectivement.

9. Mélangeur (30, 230) selon la revendication 1, dans lequel le tronçon d'extrémité amont (88) comprend au moins la moitié du déflecteur amont (50, 250), en particulier dans lequel le déflecteur amont (52, 250) présente une pluralité d'ouvertures d'entrée secondaires (62, 262) qui sont uniquement réalisées à l'intérieur du tronçon d'extrémité amont (88), un tronçon restant du déflecteur amont (50, 250) étant exempt d'ouvertures d'entrée secondaires (62, 262).

10. Mélangeur (30, 230) selon la revendication 1, dans lequel au moins la moitié du déflecteur aval (52, 252) présente une surface solide exempte d'ouvertures de sortie secondaires (66, 266), et dans lequel la surface solide du déflecteur aval (52, 252) est alignée sur l'axe de doseur (D) de sorte qu'une zone de pulvérisation définie par le doseur (36) s'étend sur la surface solide sans rencontrer d'ouvertures de sortie secondaires (66, 266).

11. Mélangeur (30, 230) selon l'une des revendications précédentes, comprenant un sous-ensemble (314) qui comporte une plaque conique (316) et un distributeur (318) qui sont montés sur le corps de mélangeur de manière à positionner le doseur (36) selon un orientation souhaitée, en particulier dans lequel la plaque conique (316) présente un tronçon de paroi circonférentiel qui entoure une ouverture pour un cône et qui est fixé au déflecteur aval (52, 252), et dans lequel le distributeur (318) est fixé à un côté de la plaque conique (316) qui est tourné vers l'extérieur de manière à au moins partiellement entourer le cône.
